# EUROPÄISCHE PATENTSCHRIFT

(11) **EP 2 743 105 B1**
(45) Veröffentlichungstag und Bekanntmachung des Hinweises auf die Patenterteilung: **10.01.2018**
(21) Anmeldenummer: 13190583.8
(22) Anmeldetag: 29.10.2013
(51) Int. Cl.: B60H 1/00

(54) **Klimatisierungsvorrichtung und Betriebsverfahren dafür**
Air conditioning device and method for operating the same
Dispositif de climatisation et son procédé de fonctionnement

(30) Priorität: 17.12.2012 DE 102012024664
(43) Veröffentlichungstag der Anmeldung: 18.06.2014
(73) Patentinhaber: Volkswagen Aktiengesellschaft, 38440 Wolfsburg (DE)
(72) Erfinder: Schmitt, Stefan, 38458 Velpke (DE); Hellmann, Peter, 38162 Cremlingen (DE); Scheel, Cornelia, 38446 Wolfsburg (DE)

(56) Entgegenhaltungen:
- EP-A1- 1 623 857
- EP-A1- 1 728 657
- EP-A2- 1 462 281

## Beschreibung

Die Erfindung bezieht sich auf eine Klimatisierungsvorrichtung für ein Kraftfahrzeug, umfassend ein Leitungssystem für Kältemittel und eine Mehrzahl von mittels des Leitungssystems verbundener Klimatisierungselemente, nämlich wenigstens
- einen Kompressor,
- einen dem Kompressor strömungstechnisch nachgeschalteten Hauptkondensator,
- einen ersten Verdampfer mit einem strömungstechnisch vorgeschalteten ersten Expansionsorgan in einem ersten Klimatisierungszweig des Leitungssystems,
- einen zweiten Verdampfer mit einem strömungstechnisch vorgeschalteten zweiten Expansionsorgan in einem zweiten Klimatisierungszweig des Leitungssystems und
wobei der erste und der zweite Klimatisierungszweig einander parallel und jeweils in Reihe mit einem den Kompressor und den Hauptkondensator enthaltenden Hauptzweig des Leitungssystems schaltbar sind
und wobei das Leitungssystem einen schaltbaren Umgehungspfad aufweist, mittels dessen in seinem geöffneten Zustand der Ausgang des Kompressors unter Umgehung des Hauptkondensators direkt mit dem Eingang des zweiten Verdampfers verbindbar ist.

Die Erfindung bezieht sich weiter auf ein Verfahren zum Betrieb einer solchen Klimatisierungsvorrichtung.

Derartige Klimatisierungsvorrichtungen und Betriebsverfahren dafür sind bekannt aus der EP 1 623 857 A1.

Typische Klimatisierungsvorrichtungen für Kraftfahrzeuge umfassen als wesentliche Elemente einen Kompressor, einen Kondensator, ein Expansionsorgan, insbesondere eine passive Drossel oder ein aktives Expansionsventil und einen Verdampfer. Im Kompressor wird gasförmiges Kältemittel komprimiert und dabei erhitzt. Im strömungstechnisch nachgeschalteten Kondensator wird das komprimierte Kältemittel verflüssigt, wobei die durch die Kompression erzeugte Wärme sowie die Kondensationswärme abgegeben werden. Hierzu ist der Kondensator als Wärmeübertrager ausgestaltet, der typischerweise von Luft aus dem Außenbereichs des Fahrzeugs durchströmt wird. Diese nimmt die abzugebende Wärme auf und führt sie als erwärmte Abluft wieder in den Außenbereich des Fahrzeugs ab. Dem Kondensator strömungstechnisch nachgeschaltet ist ein Expansionsorgan, in welchem das verflüssigte Kältemittel entspannt wird und im Anschluss an den strömungstechnisch nachgeschalteten Verdampfer strömt, in dem es unter Abgabe von Verdunstungskälte verdampft. Der Verdampfer ist hierzu als Wärmeübertrager ausgebildet, der von einem zu kühlenden Luftstrom durchströmt wird. Dieser kann aus dem Fahrzeuginneren (Umluftbetrieb) oder aus dem Außenbereich des Fahrzeugs (Frischluftbetrieb) stammen und wird typischerweise nach Durchgang durch den Verdampfer in das Fahrzeuginnere geführt. Durch die thermische Wechselwirkung im Verdampfer erfolgt eine Abkühlung und Entfeuchtung des Luftstroms; insbesondere im Winterbetrieb, wenn keine Abkühlung des Fahrzeuginnenraums gewünscht ist, kann der abgekühlte und entfeuchtete Luftstrom durch einen beheizbaren Heizungswärmeübertrager zur Gegenheizung geleitet werden.

Zur Komfortsteigerung ist es aus der DE 102 56 665 A1 bekannt, mehrere derartiger Klimageräte in einem Kraftfahrzeug vorzusehen, um unterschiedliche Innenraumbereiche unterschiedlich klimatisieren zu können. Dabei ist es insbesondere bekannt, den Kompressor und einen Hauptkondensator in einem gemeinsamen Hauptzweig des Leitungssystems anzuordnen, wohingegen unterschiedliche Klimatisierungszweige zur Klimatisierung unterschiedlicher Fahrzeugbereiche jeweils nur einen Verdampfer und das zugeordnete Expansionsorgan enthalten. Die einzelnen Klimatisierungszweige sind somit einander parallel geschaltet und jeder Klimatisierungszweig ist in Reihe mit dem Hauptzweig geschaltet, um jeweils ein vollständiges Klimagerät zu bilden. Durch Schaltorgane, insbesondere Schaltventile, die konstruktiv auch mit den Expansionsorgangen identisch sein können, können die Durchströmungen der einzelnen Klimatisierungszweige je nach Fahrerwunsch oder gem. automatisierten Vorgaben gesteuert werden.

Bei der DE 102 56 665 A1 weist der zweite Klimatisierungszweig die Besonderheit auf, dass sein Verdampfer nicht zur direkten thermischen Wechselwirkung mit einem in das Fahrzeuginnere gerichteten Luftstrom vorgesehen ist, sondern einen Latentspeicher auflädt, dessen Kälte dann zeitversetzt über weitere Wärmeübertrager im Standbetrieb des Fahrzeugs ohne Betrieb des Kompressors abgegeben werden kann.

Insbesondere in Verbindung mit modernen abwärmearmen Motoren weisen bekannte Klimatisierungsvorrichtungen zwei wesentliche Nachteile auf, die sich insbesondere bei kalten Außentemperaturen offenbaren. So ist bei herkömmlichen Anlagen bei kalten Außentemperaturen keine Entfeuchtung des Innenraums möglich, da der mit (sehr kalter) Außenluft gekühlte Kondensator auf einem niedrigeren Temperaturniveau arbeiten würde als der für die Abkühlung und Entfeuchtung der Fahrzeuginnenluft zuständige Verdampfer, der jedoch nicht bei noch kälteren Temperaturen gefahren werden kann, da dies zu einem Ausfrieren der Feuchtigkeit und damit zu einer Blockade des Luftdurchsatzes durch den Verdampfer führen würde. Weiter ist nachteilig, dass herkömmliche Anlagen bei sehr niedrigen Außentemperaturen nur eine sehr langsame Erwärmung des Fahrzeuginnenraumes erlauben, da die mit Motorkühlwasser beheizten Heizungswärmeübertrager aufgrund der geringen Abwärme moderner Motoren nur sehr langsam Wirkung entfalten. Gemeinsam stellen die beiden Nachteile eine erhebliche Komforteinbuße dar.

Aus der gattungsbildenden EP 1 623 857 A1 ist es bekannt, für das letztgenannte Problem Abhilfe daruch zu schaffen, dass die Klimatisierungsvorrichtung in einem Wärmepumpen-Modus betreibbar ist. Hierzu wird der Hauptkondensator mittels eines Bypasses umgangen, sodass komprimiertes, durch die Kompression erhitztes Kältemittel direkt und unter weiterer Umgehung jeglichen Expansionsorgans in die Verdampfer eingeleitet wird, die hierbei als Kondensatoren wirken. Die durch Kompression erzeugte Wärme wie auch die Kondensationswärme können an einen in den Fahrzeuginnenraum gerichteten Luftstrom abgegeben werden, der auch bei kalten Außentemperaturen für eine schnelle Aufheizung sorgt. Nachteilig hierbei ist jedoch die fehlende Entfeuchtung der Luft, was zu einem starken Beschlagen der Scheiben führen kann.

Aus der EP 1 728 657 A1 ist es bekannt, den Kältemittelstrom durch geeignet angeordnete Schaltventile einerseits ebenfalls um den Hauptkondensator herum zu leiten und andererseits abschnittweise umzukehren, sodass einer der Verdampfer und sein vorgeschaltetes Expansionsorgan rückwärts durchlaufen werden. Dieser Verdampfer wirkt funktional als Kondensator, der als Wärmequelle für einen Luftstrom nutzbar ist. Der andere Verdampfer wirkt funktional als herkömmlicher Verdampfer, der zur Entfeuchtung des erwärmten Luftstroms genutzt werden kann. Nachteilig hierbei ist jedoch, dass der rückwärts durchlaufene Verdampfer und sein zugeordnetes Expansionsorgan in sehr spezieller Weise ausgestaltet sein müssen, um einen solchen Rückwärts-Durchlauf zu erlauben. Dies kann zu einer im Hinblick auf die herkömmliche Verwendung als funktionaler Verdampfer suboptimalen Auslegung führen.

Ein vergleichbares Konzept ist aus der EP 1 462 281 A2 bekannt.

Es ist die Aufgabe der vorliegenden Erfindung gattungsgemäße Klimatisierungsvorrichtungen derart weiterzubilden, dass ein höherer Komfort, insbesondere bei kalten Außentemperaturen erreicht wird.

Diese Aufgabe wird in Verbindung mit den Merkmalen des Oberbegriffs von Anspruch 1
dadurch gelöst, dass der zweite Klimatisierungszweig mittels einer Ventilanordnung, wahlweise sperr- oder öffenbar ist und
das Leitungssystem weiter einen schaltbaren Verbindungszweig aufweist, mittels dessen in seinem geöffneten Zustand der Ausgang des zweiten Verdampfers anstatt mit dem Hauptzweig mit dem Eingang des ersten Expansionsorgans verbindbar ist, sodass der zweite und der erste Klimatisierungszweig miteinander in Reihe geschaltet sind.

Der Umgehungspfad dient der funktionalen Abkopplung des Hauptkondensators und des dem zweiten Verdampfer zugeordneten zweiten Expansionsorgans vom Kältemittelleitungssystem. Dabei kann der Umgehungspfad als durchgehende Bypassleitung vom Ausgang des Kompressors zum Eingang des zweiten Verdampfers ausgestaltet sein. Häufig günstiger ist es jedoch, den Umgehungspfad aus zwei Umgehungszweigen aufzubauen, von denen einer lediglich den Hauptkondensator und ein anderer das zweite Expansionsorgan umgeht. Insbesondere kann vorgesehen sein, dass ein separat schaltbarer, den Hauptkondensator umgehender erster Umgehungszweig des Umgehungspfades zwischen dem Kompressor und dem Hauptkondensator vom Hauptzweig abzweigt und in Strömungsrichtung vor dem zweiten Expansionsorgan in den zweiten Klimatisierungszweig mündet und dass ein separat schaltbarer, das zweite Expansionsorgan umgehender zweiter Umgehungszweig des Umgehungspfades in Strömungsrichtung vor dem zweiten Expansionsorgan vom zweiten Klimatisierungszweig abzweigt und zwischen dem zweiten Expansionsorgan und dem zweiten Verdampfer in dem zweiten Klimatisierungszweig mündet. Die beiden Umgehungszweige sind bei dieser Ausführungsform durch einen Abschnitt des zweiten Klimatisierungszweiges verbunden, der hierbei eine Doppelfunktion, nämlich als Bestandteil des zweiten Klimatisierungszweiges und des Bestandteil des Umgehungspfades erfüllt.

Zur vollständigen, gleichwohl technisch einfachen Abkopplung des Hauptkondensators ist bevorzugt vorgesehen, dass hauptzweigseitig der Mündungsstelle des ersten Umgehungszweiges ein Rückschlagventil angeordnet ist, welches entgegen der Strömungsrichtung im Hauptzweig schließt. Hierdurch wird sichergestellt, dass bei geöffnetem Umgehungspfad kein Kältemittel "rückwärts" in den Hauptkondensator strömen kann, sodass dieser vollständig vom Leitungssystem abgekoppelt ist.

Die erfindungsgemäße Modifikation besteht darin, dass das Leitungssystem weiter einen schaltbaren Verbindungszweig aufweist, mittels dessen in seinem geöffneten Zustand der Ausgang des zweiten Verdampfers anstatt mit dem Hauptleitungszweig mit dem Eingang des ersten Expansionsorgans verbindbar ist, sodass der zweite und der erste Klimatisierungszweig miteinander in Reihe geschaltet sind. Eine derartige Klimatisierungsvorrichtung wird bevorzugt derart angesteuert, dass
- der Umgehungspfad geöffnet ist,
- der Verbindungszweig geöffnet ist,
- der erste Verdampfer mit Luft aus dem Fahrzeuginnenraum durchströmt wird, wobei im ersten Expansionsorgan entspanntes Kältemittel im ersten Verdampfer verdampft,
- der zweite Verdampfer mit Luft aus dem Fahrzeuginnenraum durchströmt wird, wobei komprimiertes Kältemittel im zweiten Verdampfer kondensiert, und
- die durch den ersten Verdampfer und den zweiten Verdampfer geströmte Luft zurück in den Fahrzeuginnenraum geleitet wird.

Durch die vorgenommene Umschaltung und die damit verbundene Umleitung des Kältemittelstroms wird im Kompressor komprimiertes, gasförmiges Kältemittel direkt in den zweiten Verdampfer eingespeist. Dieser wird von Luft aus dem Fahrzeuginneren durchströmt, was angesichts der hohen durch die Kompression erreichten Temperatur des Kältemittelgases dessen Kühlung entspricht. Bei ausreichendem Luftdurchlass kann dadurch eine Verflüssigung des Kältemittels im zweiten Verdampfer erreicht werden. Der zweite Verdampfer wirkt in diesem Zustand daher nicht als solcher, sondern im Gegenteil als Kondensator. Der Begriff "Verdampfer" für den zweiten Verdampfer ist in diesem Zusammenhang daher als reine Elementenbezeichnung und nicht funktional zu verstehen. Technisch stellt diese unterschiedliche Nutzung ein und desselben Elementes keine Schwierigkeit dar, da sowohl ein funktionaler Verdampfer als auch ein funktionaler Kondensator konstruktiv schlicht als kältemitteldurchströmter Wärmeübertrager ausgebildet ist.

Durch die Umwidmung der Funktionalität des zweiten Verdampfers zusammen mit der durch die Öffnung des Verbindungszweiges realisierten Reihenschaltung von zweiten und erstem Klimatisierungszweig ergibt sich funktional ein Klimagerät aus dem Kompressor, dem als Kondensator wirkenden zweiten Verdampfer, dem ersten Expansionsorgan und dem als Verdampfer wirkenden ersten Verdampfer. Mit anderen Wort wird gegenüber dem herkömmlichen, aus Hauptzweig und erstem Klimatisierungszweig bestehenden Klimagerät der Hauptkondensator durch den nun als Kondensator wirkenden zweiten Verdampfer ersetzt. Dies hat den wesentlichen Vorteil, dass der funktionale Kondensator nun bei einer vergleichsweise hohen Temperatur gefahren wird, sodass der funktionale Verdampfer durch Abkühlung eine Entfeuchtung erwirken kann, ohne dass ein Ausfrieren der Feuchtigkeit zu befürchten wäre. Zudem wird die am funktionalen Kondensator, d.h. am zweiten Verdampfer anfallende Kondensationswärme auf den Umluftstrom übertragen und kann zur Heizung des Fahrzeuginnenraums genutzt werden. Die erfindungsgemäße Realisierung dieses an sich bekannten Gedankens der "Umwidmung" eines Verdampfers zum Kondensator erfolgt ohne Umkehrung des Kältemittelflusses durch den umgewidmeten, zweiten Verdampfer. Dieser kann daher zusammen mit seinem vorgeschalteten Expansionsorgan für eine einzige Strömungsrichtung optimiert werden.

Vorteilhafterweise ist jedem der (konstruktiven) Verdampfer ein beheizbarer Wärmeübertrager zugeordnet, der von dem Luftstrom aus dem jeweiligen (konstruktiven) Verdampfer wenigstens teilweise durchströmbar ist. Die Beheizung des Heizungswärmeübertragers kann durch das Motorkühlwasser und/oder elektrisch oder auf sonstige Weise erfolgen. Hierdurch wird ein Gegenheizen des im (funktionalen) Kondensator und im (funktionalen) Verdampfer abgekühlten Umluftstroms erreicht.

Bei einer Weiterbildung der Erfindung ist vorgesehen, dass das Leitungssystem weiter einen schaltbaren Expansionszweig aufweist, mittels dessen in seinem geöffneten Zustand ein drittes Expansionsorgan zwischen den zweiten Klimatisierungszweig und den Hauptzweig schaltbar ist. Bevorzugt wird eine solche Klimatisierungsvorrichtung derart betrieben, dass
- der Umgehungspfad geöffnet ist,
- der Expansionszweig geöffnet ist,
- der zweite Verdampfer mit Luft aus dem Fahrzeuginnenraum und/oder Luft von außerhalb des Fahrzeugs durchströmt wird, die durch thermische Wechselwirkung mit durch Kompression im Kompressor erhitztem Kältemittel, welches den zweiten Verdampfer durchströmt, erhitzt wird und
- die durch den zweiten Verdampfer geströmte Luft in den Fahrzeuginnenraum geleitet wird.

Dabei ist der Verbindungszweig zu sperren. Eine solche Schaltung erlaubt ein schnelles Aufheizen des Fahrzeuginnenraums auch bei noch kaltem Motor. Bei dieser Schaltung wird der zweite Verdampfer weder als funktionaler Verdampfer noch als funktionaler Kondensator sondern lediglich als funktionaler Gaskühler bzw. funktionaler Heizungswärmeübertrager genutzt. Er wird unter Umgehung des Hauptkondensators und des zweiten Expansionsorgans direkt mit dem durch Kompression erhitzten, gasförmigen Kältemittel durchströmt. Andererseits wird er von einem in das Fahrzeuginnere gerichteten Luftstrom durchströmt, der sich durch die thermische Wechselwirkung mit dem heißen Kältemittelgas aufheizt. Der Luftstrom wird dabei vorzugsweise so gesteuert, dass möglichst keine Verflüssigung des Kältemittelgases erfolgt (eine geringfügige Verflüssigung kann im zugeschalteten dritten Expansionsorgan kompensiert werden).

Es ergibt sich ein aus dem Kompressor, dem als Gaskühler bzw. Heizungswärmeübertrager wirkenden zweiten Verdampfer und dem dritten Expansionsorgan bestehender Heizgaskreislauf, der die im Kompressor aufgenommene mechanische Energie sehr schnell und effektiv in eine Erwärmung des Fahrzeuginnenraums umsetzt. Diese Art der Heizung ist zwar energetisch nicht günstig, was jedoch tolerierbar ist, da diese Schaltung nur zu kurzfristigen Überbrückung nach einem Kaltstart Anwendung findet, um auch bei noch kaltem Motorkühlwasser eine schnelle Aufheizung des Fahrzeuginnenraums zu ermöglichen.

Weitere Merkmale und Vorteile der Erfindung ergeben sich aus der nachfolgenden, speziellen Beschreibung und den Zeichnungen.

Es zeigen:
- Figur 1: eine erfindungsgemäße Klimatisierungsvorrichtung (Teilfigur 1a) im Vergleich zu einer herkömmlichen Klimatisierungsvorrichtung (Teilfigur 1b),
- Figur 2: die Klimatisierungsvorrichtung von Figur 1a im Entfeuchtungs- und Zuheizbetrieb bei tiefen Außentemperaturen,
- Figur 3: die Klimatisierungsvorrichtung gem. Figur 1a im Schnellheizbetrieb,
- Figur 4: die Klimatisierungsvorrichtung gem. Figur 1a im Normalbetrieb,
- Figur 5: die Klimatisierungsvorrichtung gem. Figur 1a im eingeschränkten Normalbetrieb.

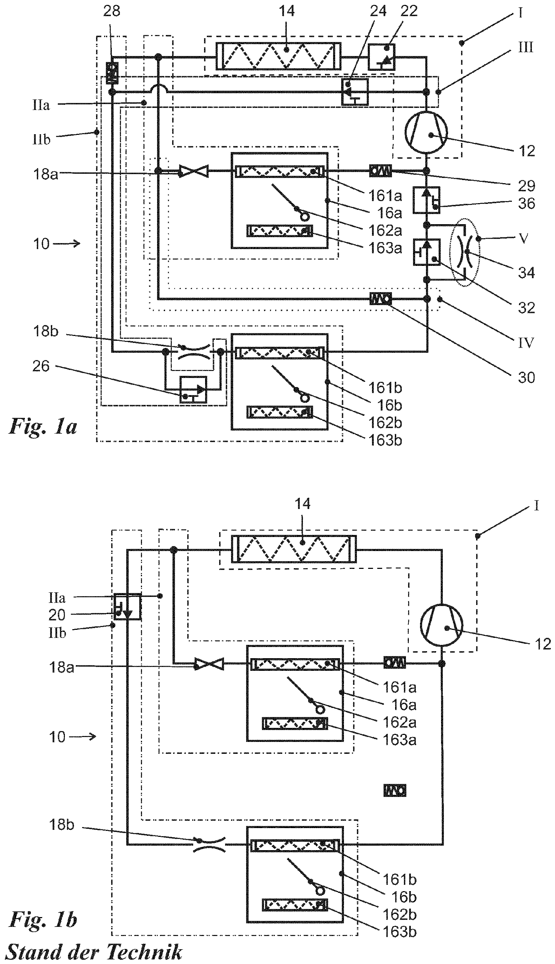

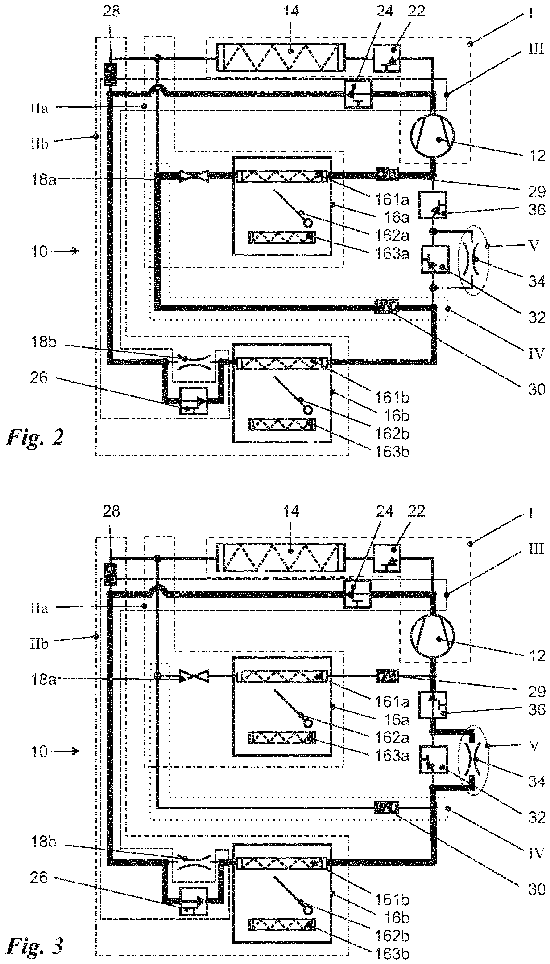

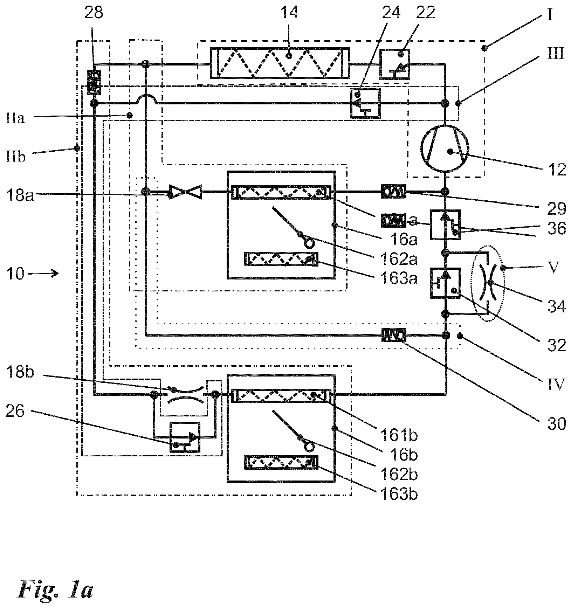

In Figur 1 werden in den Teilfiguren 1a und 1b die erfindungsgemäße Klimatisierungsvorrichtung und eine Klimatisierungsvorrichtung nach dem Stand der Technik einander vergleichend gegenübergestellt. Anhand dieses Vergleichs sollen zunächst die konstruktiven Unterschiede erläutert werden. Die Figuren 2 bis 5 zeigen verschiedene Schaltungsstellungen der Klimatisierungsvorrichtung gem. Figur 1a zur Erzielung spezieller Wirkungen in unterschiedlichen Betriebsarten. Diese sollen im Anschluss eingehend erläutert werden.

Gleiche Bezugszeichen in den Figuren deuten auf gleiche oder analoge Bauteile hin.

Sowohl die erfindungsgemäße als auch die bekannte Vorrichtung weisen einen Hauptzweig I eines Kältemittelleitungssystems 10 auf. Der Hauptzweig I des Leitungssystems 10 zeichnet sich dadurch aus, dass er einen Kompressor 12 und einen diesem nachgeschalteten Haupkondensator 14 aufweist. Der Kompressor 12 wird typischerweise über das Antriebsaggregat des Kraftfahrzeugs angetrieben. Der Hauptkondensator 14 ist typischerweise als Wärmeübertrager konstruiert, der eine thermische Wechselwirkung zwischen dem ihn durchströmenden Kältemittel und einem Luftstrom aus Luft aus dem Fahrzeugaußenraum gestattet.

In Strömungsrichtung hinter dem Hauptzweig I sind parallel zueinander ein erster Klimatisierungszweig IIa und ein zweiter Klimatisierungszweig IIb geschaltet. Die beiden Klimatisierungszweige IIa und IIb zeichnen sich jeweils dadurch aus, dass sie jeweils einen Verdampfer und ein diesem vorgeschaltetes Expansionsorgan aufweisen. Im gezeigten Ausführungsbeispiel sind dies im ersten Klimatisierungszweig IIa der erste Verdampfer 161a und das als thermisches Expansionsventil ausgebildete erste Expansionsorgan 18a sowie im zweiten Klimatisierungszweig IIb der zweite Verdampfer 161b und das als passive Drossel ausgebildete zweite Expansionsorgan 18b. Da die Verdampfer 161a,b in der Regel nicht als isolierte Elemente ausgebildet sind, sind sie in den Ausführungsbeispielen als Bestandteile komplexerer Klimageräte 16a,b dargestellt, die in üblicher Ausgestaltung außer dem hier erfindungsrelevanten Verdampfer 161a,b jeweils auch einen z.B. an den Motorkühlwasserkreis angeschlossenen Heiz-Wärmeübertrager 162a,b und eine Temperaturmischklappe 163a,b aufweisen, die hier jedoch nicht erfindungsrelevant sind. Dem ersten Klimatisierungszweig IIa ist bei der gezeigten Ausführungsform ein Rückschlagventil 29 nachgeschaltet, das allerdings aufgrund des Unterdrucks an der Saugseite des Kompressors12 nicht zwingend erforderlich ist. Es erhöht jedoch bei einigen der weiter unten beschriebenen Schaltzustände die Sicherheit gegen einen unerwünschten Rückstrom in den ersten Klimatisierungszweig IIa. Bei der in Figur 1b gezeigten Ausführungsform aus dem Stand der Technik ist weiter ein Schaltventil 20 vorgesehen, mit welchem der zweite Klimatisierungszweig IIb wahlweise sperr- oder öffenbar ist.

Die erfindungsgemäße Klimatisierungsvorrichtung in der Ausführungsform gem. Figur 1a weist zusätzlich einen Umgehungspfad III auf, der bei geeigneter, koordinierter Schaltung der Schaltventile 22, 24, 26 den Ausgang des Kompressors 12 unmittelbar, d.h. unter Umgehung des Hauptkondensators 14 und des zweiten Expansionsorgans 18b, mit dem Eingang des zweiten Verdampfers 161b verbindet. Bei der gezeigten Ausführungsform setzt sich der Umgehungspfad III aus zwei Umgehungszweigen und einem Abschnitt des zweiten Klimatisierungszweiges IIb zusammen. Ein erster Umgehungszweig des Umgehungspfades III zweigt in Strömungsrichtung hinter dem Ausgang des Kompressors 12 vom Hauptzweig I ab und mündet in Strömungsrichtung vor dem zweiten Expansionsorgan 18b in den zweiten Klimatisierungszweig IIb. Hauptzweigseitig dieser Mündungsstelle ist ein Rückschlagventil 28 angeordnet, welches entgegen der Strömungsrichtung im Hauptzweig I schließt, sodass bei der in Figur 1a gezeigten Stellung der Schaltventile 22, 24 der Hauptkondensator 14 funktional vollständig vom Kältemittelstrom im Leitungssystem 10 abgekoppelt ist. Der zweite Umgehungszweig des Umgehungspfades III ist mittels des Schaltventils 26 als schaltbare Bypassleitung des zweiten Expansionsorgans 18b ausgestaltet. Die beiden Umgehungszweige sind mit einem Abschnitt des zweiten Klimatisierungszweiges IIb verbunden, der dadurch bei der gezeigten Ausführungsform Teil des Umgehungspfades III wird.

Weiter weist die erfindungsgemäße Klimatisierungsvorrichtung gem. der Ausführungsform von Figur 1a einen Verbindungszweig IV auf, der den Ausgang des zweiten Verdampfers 161b mit dem Eingang des ersten Expansionsorgans 18a verbindet. Er enthält ein Rückschlagventil 30, welches entgegen der vorbezeichneten Richtung vom zweiten Verdampfer 161b zum ersten Expansionsorgan 18a schließt.

Schließlich weist die Klimatisierungsvorrichtung gem. der Ausführungsform von Figur 1a einen Expansionszweig V auf, der sich dadurch auszeichnet, dass er die Einschaltung eines dritten Expansionsorgans 34, das hier als passive Drossel dargestellt ist, in die Verbindung zwischen dem Ausgangs des zweiten Verdampfers 161b und dem Eingang des Kompressors 12 ermöglicht. Die Schaltbarkeit des Expansionszweiges V wird durch die koordinierte Ansteuerung der Schaltventile 32, 36 gewährleistet.

Nachfolgend sollen anhand der Figuren 2 bis 5 die wesentlichen Schaltzustände und Betriebsarten der erfindungsgemäßen Klimatisierungsvorrichtung in der Ausführungsform von Figur 1 erläutert werden.

Figur 2 stellt eine Betriebsart der erfindungsgemäßen Klimatisierungsvorrichtung dar, die eine Entfeuchtung der Fahrzeuginnenluft auch bei sehr niedrigen Außentemperaturen erlaubt. Durch Sperren des Schaltventils 22 und Öffnen des Schaltventils 24 wird der Umgehungspfad III geöffnet und gleichzeitig der Hauptkondensator 14 funktional vom übrigen Leitungssystem 10 abgekoppelt. Im Kompressor 12 komprimiertes, gasförmiges Kältemittel strömt durch den ersten Umgehungszweig des Umgehungspfades III in den zweiten Klimatisierungszweig IIb. Durch das Rückschlagventil 28 wird ein Rückströmen des Kältemittels in den Hauptkondensator 14 zuverlässig unterbunden. Das Kältemittel strömt weiter durch den zweiten Umgehungszweig des Umgehungspfades III und umgeht dabei aufgrund der Öffnung des Schaltventils 26 das zweite Expansionsorgan 18b. Auf diese Weise ist der Eingang des zweiten Verdampfers 161b direkt mit dem Ausgang des Kompressors 12 verbunden. Der zweite Verdampfer 161b wird mit vergleichsweise warmer Luft aus dem Fahrzeuginnenraum durchströmt und kann dadurch und/oder durch weitere Temperierungsmaßnahmen derart eingestellt werden, dass das komprimierte Kältemittel im zweiten Verdampfer 161b kondensiert. Die dabei freiwerdende Kondensationswärme wird von dem Luftstrom durch den zweiten Verdampfer 161b aufgenommen, der ggfs. durch einen im zweiten Wärmeverdampfer 161b integrierten oder mit diesem verbundenen Heizungswärmeübertrager gegengeheizt und zurück in den Fahrzeuginnenraum geleitet wird. Das kondensierte Kältemittel wird aufgrund der gesperrten Schaltventile 32 und 36 über das in Öffnungsrichtung geschaltete Rückschlagventil 30 in den Verbindungszweig IV geleitet, durch welchen es zum Eingang des ersten Expansionsorgans 18a gelangt. Von dort strömt es in den ersten Verdampfer 161a, der in bekannter Weise betrieben werden kann und ihn durchströmende Luft aus dem Fahrzeuginneren entfeuchtet. Die entfeuchtete Luft wird ggfs. nach Gegenheizung durch einen im ersten Verdampfer 161a integrierten oder mit diesem verbundenen Heizungswärmeübertrager zurück in den Fahrzeuginnenraum geleitet. Das verdampfte Kältemittels strömt weiter zum Kompressor 12, von wo aus sich der geschilderte Kreislauf wiederholt. Man beachte, dass eine separate Sicherung des ersten Klimatisierungszweiges IIa gegen den Hauptkondensator 14 zur Verhinderung der Rückströmung des Kältemittels in den Hauptkondensator 14 nicht erforderlich ist, da durch die Verbindung mit der Saugseite des Kompressors 12 eine solche Rückströmung auch ohne Sicherungsventil unmöglich ist. Es ergeben sich also zwei Teilumluftströme, die nicht-entfeuchtete Fahrzeuginnenraumluft über den zweiten Verdampfer 161b und entfeuchtete Fahrzeuginnenraumluft über den ersten Verdampfer 161a umwälzen. Bei einer bevorzugten Ausführungsform erfolgt die Ausleitung der entfeuchteten Luft daher vorzugsweise im Frontbereich des Fahrzeugs, besonders bevorzugt im Bereich der Windschutzscheiben und/oder der vorderen Seitenscheiben, während der Luftaustritt der nicht-entfeuchteten Luft bevorzugt im Fußraum und/oder im Heckbereich des Fahrzeugs erfolgt.

Figur 3 zeigt eine Betriebsart der erfindungsgemäßen Klimatisierungsvorrichtung, die ein schnelles Aufheizen des Fahrzeuginnenraums auch bei kalten Außentemperaturen und noch kaltem Motor erlaubt. Wie bei der zuvor erläuterten Betriebsart ist der Umgehungspfad III geöffnet. Weiter ist der Expansionszweig V durch Sperren des Schaltventils 32 und Öffnen des Schaltventils 36 geöffnet. Vom Kompressor 12 strömt komprimiertes, gasförmiges Kältemittel durch den zweiten Verdampfer 161b, der von Luft aus dem Fahrzeuginnenraum und/oder dem Fahrzeugaußenraum durchströmt und ggfs. durch weitere Temperierungsmaßnahmen so betrieben wird, dass das Kältemittel in ihm nicht oder nur zu einem geringen Teil auskondensiert. Beabsichtigt ist vielmehr eine Durchströmung des zweiten Verdampfers 161b mit heißem, gasförmigem Kältemittel. Der zweite Wärmeübertrager 161b wirkt somit als Heizungswärmeübertrager für die Luft, die nach der thermischen Wechselwirkung im zweiten Verdampfer 161b in den Fahrzeuginnenraum geleitet wird. Das Kältemittel strömt danach durch das dritte Expansionsorgan 34, wo es entspannt wird und zur erneuten Kompression, d.h. hier insbesondere zur erneuten Aufheizung wieder dem Kompressor 12 zugeführt wird. Man beachte, dass eine gesonderte Absicherung des Verbindungszweiges IV oder des ersten Klimatisierungszweiges IIa mit besonderen Ventilen nicht erforderlich ist, da aufgrund der Anbindung an die Saugseite des Kompressors 12 ein Rückströmen in diese Zweige nicht möglich ist. Allerdings kann auch, wie bei der gezeigten Ausführungsform vorgesehen ein Rückschlagventil 29 den zweiten Klimatisierungszweig IIa absichern.

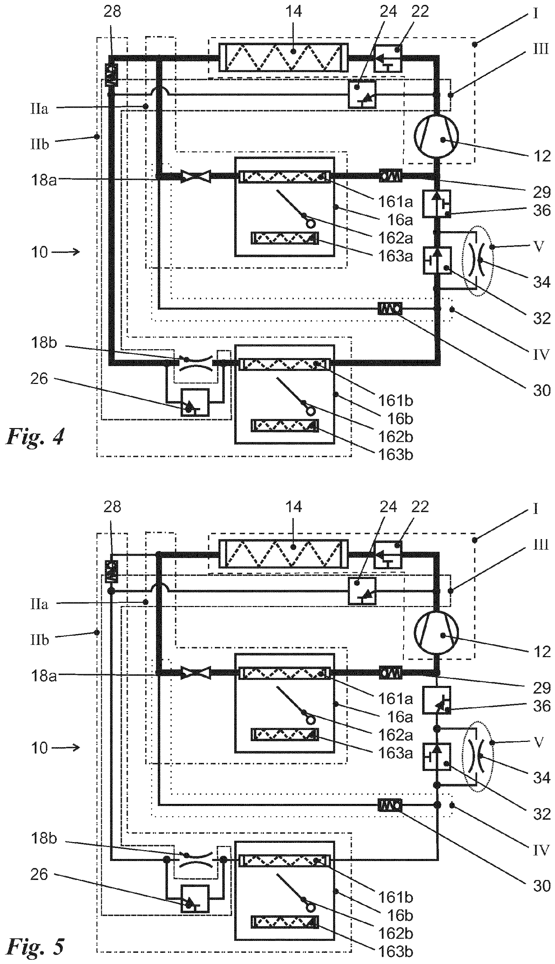

Figur 4 zeigt eine Betriebsart der erfindungsgemäßen Klimatisierungsvorrichtung, die dem herkömmlichen Betrieb herkömmlicher Anlagen mit zwei Verdampfern entspricht. Durch Sperren des Schaltventils 24, Öffnen des Schaltventils 22 und Sperren des Schaltventils 26 ist der Umgehungspfad III gesperrt. Stattdessen strömt das Kältemittel von dem Kompressor 12 durch den Hauptkondensator 14, wo es verflüssigt wird. Im Anschluss zweigt der erste Klimatisierungszweig IIa und der zweite Klimatisierungszweig IIb vom Hauptzweig I ab. Das Rückschlagventil 28 wird dabei in Öffnungsrichtung durchlaufen. Das Verhältnis, in welchem Kältemittel in dem ersten und zweiten Klimatisierungszweig IIa, IIb strömt, kann dabei durch die Einstellung des aktiven Ventils 18a eingestellt werden. Dieses dient auch der Entspannung des Kältemittels im ersten Klimatisierungszweig; im zweiten Klimatisierungszweig IIb ist hierfür das zweite Expansionsorgan 18b zuständig. Die Verdampfung erfolgt im Anschluss in den beiden Verdampfern 161a bzw. 161b. Unmittelbar vor dem Kompressor 18 münden die beiden Klimatisierungszweige IIa, IIb wieder in den Hauptzweig I.

Figur 5 zeigt im Wesentlichen die gleiche Betriebsart wie Figur 4, wobei jedoch das Schaltventil 36 gesperrt ist und daher einen Kältemittelstrom durch den zweiten Klimatisierungszweig IIb unterbindet. Diese Betriebsart entspricht dem herkömmlichen Betrieb von Klimatisierungsvorrichtungen mit nur einem Klimagerät.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere ist das vorliegend mit zwei Verdampfern erläuterte Konzept erweiterbar auf Anlagen mit mehr als zwei Verdampfern. Auch die konkrete Anordnung der Komponenten im Fahrzeug sowie die Anordnung von Luftein- und -auslässen ist von Fachmann an die Gegebenheiten des Einzelfalls anzupassen. Wie bereits erwähnt ist besonders bevorzugt vorgesehen, den ersten Verdampfer als für die Klimatisierung des vorderen und/oder oberen Bereichs des Kraftfahrzeugs vorzusehen, wohingegen der zweite Verdampfer bevorzugt als für den rückwärtigen und/oder unteren Bereich des Fahrzeuginnenraums zuständig vorgesehen ist.

### Bezugszeichenliste

- 10: Leitungssystem
- I: Hauptzweig von 10
- IIa,b: erster/zweiter Klimatisierungszweig von 10
- III: Umgehungspfad von
- IV: Verbindungszweig von 10
- V: Expansionszweig von 10
- 12: Kompressor
- 14: Hauptkondensator
- 16a,b: erstes/zweites Klimagerät
- 161a,b: erster/zweiter Verdampfer
- 162a,b: erster/zweiter Heiz-Wärmeübertrager
- 163a,b: erste/zweite Temperaturmischklappe
- 18a,b: erstes/zweites Expansionsorgan
- 20: Schaltventil
- 22: Schaltventil
- 24: Schaltventil
- 26: Schaltventil
- 28: Rückschlagventil
- 29: Rückschlagventil
- 30: Rückschlagventil
- 32: Schaltventil
- 34: drittes Expansionsorgan
- 36: Schaltventil

## Patentansprüche

1. Klimatisierungsvorrichtung für ein Kraftfahrzeug, umfassend ein Leitungssystem (10) für Kältemittel und eine Mehrzahl von mittels des Leitungssystems (10) verbundener Klimatisierungselemente, nämlich wenigstens
- einen Kompressor (12),
- einen dem Kompressor (12) strömungstechnisch nachgeschalteten Hauptkondensator (14),
- einen ersten Verdampfer (161a) mit einem strömungstechnisch vorgeschalteten ersten Expansionsorgan (18a) in einem ersten Klimatisierungszweig (IIa) des Leitungssystems (10) und
- einen zweiten Verdampfer (161b) mit einem strömungstechnisch vorgeschalteten zweiten Expansionsorgan (18b) in einem zweiten Klimatisierungszweig (IIb) des Leitungssystems (10),
wobei der erste und der zweite Klimatisierungszweig (IIa,b) einander parallel und jeweils in Reihe mit einem den Kompressor (12) und den Hauptkondensator (14) enthaltenden Hauptzweig (I) des Leitungssystems (10) schaltbar sind,
und wobei das Leitungssystem (10) einen schaltbaren Umgehungspfad (III) aufweist, mittels dessen in seinem geöffneten Zustand der Ausgang des Kompressors (12) unter Umgehung des Hauptkondensators (14) direkt mit dem Eingang des zweiten Verdampfers (161b) verbindbar ist
**dadurch gekennzeichnet,**
**dass** der zweite Klimatisierungszweig (IIb) mittels einer Ventilanordnung (36), wahlweise sperr- oder öffenbar ist und
das Leitungssystem (10) weiter einen schaltbaren Verbindungszweig (IV) aufweist, mittels dessen in seinem geöffneten Zustand der Ausgang des zweiten Verdampfers (161b) anstatt mit dem Hauptzweig (I) mit dem Eingang des ersten Expansionsorgans (18a) verbindbar ist, sodass der zweite und der erste Klimatisierungszweig (IIb, a) miteinander in Reihe geschaltet sind.

2. Klimatisierungsvorrichtung nach Anspruch 1,
**dadurch gekennzeichnet,**
**dass** ein separat schaltbarer, den Hauptkondensator (14) umgehender erster Umgehungszweig des Umgehungspfades (III) zwischen dem Kompressor und dem Hauptkondensator (14) vom Hauptzweig (I) abzweigt und in Strömungsrichtung vor dem zweiten Expansionsorgan (18b) in den zweiten Klimatisierungszweig (IIb) mündet und dass ein separat schaltbarer, das zweite Expansionsorgan (18b) umgehender zweiter Umgehungszweig des Umgehungspfades (III) in Strömungsrichtung vor dem zweiten Expansionsorgan (18b) vom zweiten Klimatisierungszweig (IIb) abzweigt und zwischen dem zweiten Expansionsorgan (18b) und dem zweiten Verdampfer (161b) in den zweiten Klimatisierungszweig (IIb) mündet.

3. Klimatisierungsvorrichtung nach Anspruch 2,
**dadurch gekennzeichnet,**
**dass** hauptzweigseitig der Mündungsstelle des ersten Umgehungzweiges ein Rückschlagventil (28) angeordnet ist, welches entgegen der Strömungsrichtung im Hauptzweig (I) schließt.

4. Klimatisierungsvorrichtung nach Anspruch 3,
**dadurch gekennzeichnet,**
**dass** der Verbindungszweig (IV) ein Rückschlagventil (30) aufweist, welches entgegen der Strömungsrichtung vom zweiten Verdampfer (161b) zum ersten Expansionsorgan (18a) schließt.

5. Klimatisierungsvorrichtung nach einem der vorangehenden Ansprüche,
**dadurch gekennzeichnet,**
**dass** das Leitungssystem (10) weiter einen schaltbaren Expansionszweig (V) aufweist, mittels dessen in seinem geöffneten Zustand ein drittes Expansionsorgan (34) zwischen den zweiten Klimatisierungszweig (IIb) und den Hauptzweig (I) schaltbar ist.

6. Verfahren zum Betrieb einer Klimatisierungsvorrichtung nach einem der vorangehenden Ansprüche,
**dadurch gekennzeichnet, dass**
- der Umgehungspfad (III) geöffnet ist,
- der Verbindungszweig (IV) geöffnet ist,
- der erste Verdampfer (161a) mit Luft aus dem Fahrzeuginnenraum durchströmt wird, wobei im ersten Expansionsorgan (18a) entspanntes Kältemittel im ersten Verdampfer (161a) verdampft,
- der zweite Verdampfer (161b) mit Luft aus dem Fahrzeuginnenraum durchströmt wird, wobei komprimiertes Kältemittel im zweiten Verdampfer (161b) kondensiert, und
- die durch den ersten Verdampfer (161a) und den zweiten Verdampfer (161b) geströmte Luft zurück in den Fahrzeuginnenraum geleitet wird.

7. Verfahren nach Anspruch 6,
**dadurch gekennzeichnet,**
**dass** jedem Verdampfer (161a,b) ein beheizbarer Heizungswärmeübertrager zugeordnet ist, der von dem Luftstrom aus dem jeweiligen Verdampfer (161a,b) wenigstens teilweise durchströmbar ist.

8. Verfahren zum Betrieb einer Klimatisierungsvorrichtung nach Anspruch 5,
**dadurch gekennzeichnet, dass**
- der Umgehungspfad (III) geöffnet ist,
- der Expansionszweig (V) geöffnet ist,
- der zweite Verdampfer (161b) mit Luft aus dem Fahrzeuginnenraum und/oder Luft von außerhalb des Fahrzeugs durchströmt wird, die durch thermische Wechselwirkung mit durch Kompression im Kompressor (12) erhitztem Kältemittel, welches den zweiten Verdampfer (161b) durchströmt, erhitzt wird und
- die durch den zweiten Verdampfer (161b) geströmte Luft in den Fahrzeuginnenraum geleitet wird.

## Claims

1. Air conditioning device for a motor vehicle, comprising a conduction system (10) for refrigerant and a plurality of air conditioning elements which are connected by means of the conduction system (10), namely at least
- a compressor (12),
- a main condenser (14) connected downstream of the compressor (12) in terms of flow,
- a first evaporator (161a) with a first expansion member (18a), which is connected upstream in terms of flow, in a first air conditioning branch (IIa) of the conduction system (10), and
- a second evaporator (161b) with a second expansion member (18b), which is connected upstream in terms of flow, in a second air conditioning branch (IIb) of the conduction system (10),
wherein the first and the second air conditioning branch (IIa, b) are switchable parallel to each other and in each case in series with a main branch (I) of the conduction system (10), the main branch containing the compressor (12) and the main condenser (14),
and wherein the conduction system (10) has a switchable bypass path (III) by means of which, in the open state thereof, the output of the compressor (12) is connectable directly to the input of the second evaporator (161b), bypassing the main condenser (14),
**characterized in that**
the second air conditioning branch (IIb) is optionally blockable or openable by means of a valve arrangement (36), and the conduction system (10) furthermore has a switchable connecting branch (IV) by means of which, in the open state thereof, the output of the second evaporator (161b) is connectable to the input of the first expansion member (18a), instead of to the main branch (I), and therefore the second and the first air conditioning branch (IIb, a) are connectable to each other in series.

2. Air conditioning device according to Claim 1,
**characterized in that**
a separately switchable first bypass branch of the bypass path (III) between the compressor and the main condenser (14), said bypass branch bypassing the main condenser (14), branches off from the main branch (I) and, in the direction of flow upstream of the second expansion member (18b), leads into the second air conditioning branch (IIb), and **in that** a separately switchable second bypass branch of the bypass path (III), said bypass branch bypassing the second expansion member (18b), branches off in the direction of flow upstream of the second expansion member (18b) from the second air conditioning branch (IIb) and opens between the second expansion member (18b) and the second evaporator (161b) into the second air conditioning branch (IIb).

3. Air conditioning device according to Claim 2,
**characterized in that**
a nonreturn valve (28) is arranged on the main branch side of the opening point of the first bypass branch, said nonreturn valve closing counter to the direction of flow in the main branch (I).

4. Air conditioning device according to Claim 3,
**characterized in that**
the connecting branch (IV) has a nonreturn valve (30) which closes counter to the direction of flow from the second evaporator (161b) to the first expansion member (18a).

5. Air conditioning device according to one of the preceding claims,
**characterized in that**
the conduction system (10) furthermore has a switchable expansion branch (V) by means of which, in the open state thereof, a third expansion member (34) is switchable between the second air conditioning branch (IIb) and the main branch (I).

6. Method for operating an air conditioning device according to one of the preceding claims, **characterized in that**
- the bypass path (III) is opened,
- the connecting branch (IV) is opened,
- air from the vehicle interior flows through the first evaporator (161a), wherein refrigerant expanded in the first expansion member (18a) evaporates in the first evaporator (161a),
- air from the vehicle interior flows through the second evaporator (161b), wherein compressed refrigerant condenses in the second evaporator (161b), and
- the air which has flowed through the first evaporator (161a) and the second evaporator (161b) is conducted back into the vehicle interior.

7. Method according to Claim 6,
**characterized in that**
each evaporator (161a, b) is assigned a heatable heating heat exchanger through which at least some of the air flow from the respective evaporator (161a, b) can flow.

8. Method for operating an air conditioning device according to Claim 5,
**characterized in that**
- the bypass path (III) is opened,
- the expansion branch (V) is opened,
- air from the vehicle interior and/or air from outside the vehicle flows through the second evaporator (161b) and is heated by thermal interaction with refrigerant which is heated in the compressor (12) by means of compression and flows through the second evaporator (161b), and
- the air which has flowed through the second evaporator (161b) is conducted into the vehicle interior.

## Revendications

1. Dispositif de climatisation pour un véhicule automobile, comprenant un système de conduite (10) pour un fluide caloporteur et une pluralité d'éléments de climatisation connectés au moyen du système de conduite (10), à savoir au moins
- un compresseur (12),
- un condenseur principal (14) raccordé en aval du compresseur (12), du point de vue de la technique des fluides,
- un premier évaporateur (161a) avec un premier organe d'expansion (18a) raccordé en amont du point de vue de la technique des fluides, dans une première branche de climatisation (IIa) du système de conduite (10), et
- un deuxième évaporateur (161b) avec un deuxième organe d'expansion (18b) raccordé en amont du point de vue de la technique des fluides, dans une deuxième branche de climatisation (IIb) du système de conduite (10),
la première et la deuxième branche de climatisation (IIa,b) pouvant être raccordées en parallèle l'une à l'autre et à chaque fois en série avec une branche principale (I) du système de conduite (10) contenant le compresseur (12) et le condenseur principal (14),
et le système de conduite (10) présentant un chemin de contournement (III) pouvant être raccordé, au moyen duquel, dans son état ouvert, la sortie du compresseur (12) peut être connectée directement, en contournant le condenseur principal (14), à l'entrée du deuxième évaporateur (161b),
**caractérisé en ce que**
la deuxième branche de climatisation (IIb) peut être fermée ou ouverte de manière sélective au moyen d'un agencement de soupape (36) et
le système de conduite (10) présente en outre une branche de connexion (IV) pouvant être raccordée, au moyen de laquelle, dans son état ouvert, la sortie du deuxième évaporateur (161b), au lieu de la branche principale (I), peut être connectée à l'entrée du premier organe d'expansion (18a) de telle sorte que la deuxième et la première branche de climatisation (IIb,a) soient raccordées en série l'une avec l'autre.

2. Dispositif de climatisation selon la revendication 1,
**caractérisé en ce qu'**
une première branche de contournement du chemin de contournement (III), pouvant être raccordée séparément et contournant le condenseur principal (14), part de la branche principale (I) entre le compresseur et le condenseur principal (14) et débouche, dans la direction d'écoulement avant le deuxième organe d'expansion (18b), dans la deuxième branche de climatisation (IIb) et **en ce qu'**une deuxième branche de contournement du chemin de contournement (III), pouvant être raccordée séparément et contournant le deuxième organe d'expansion (18b), part de la deuxième branche de climatisation (IIb) dans la direction d'écoulement avant le deuxième organe d'expansion (18b) et débouche dans la deuxième branche de climatisation (IIb) entre le deuxième organe d'expansion (18b) et le deuxième évaporateur (161b).

3. Dispositif de climatisation selon la revendication 2,
**caractérisé en ce que**
du côté de la branche principale du point d'embouchure de la première branche de contournement, est disposé un clapet antiretour (28) qui se ferme dans le sens opposé au sens d'écoulement dans la branche principale (I).

4. Dispositif de climatisation selon la revendication 3,
**caractérisé en ce que**
la branche de connexion (IV) présente un clapet antiretour (30) qui se ferme dans le sens opposé au sens d'écoulement allant du deuxième évaporateur (161b) vers le premier organe d'expansion (18a).

5. Dispositif de climatisation selon l'une quelconque des revendications précédentes,
**caractérisé en ce que**
le système de conduite (10) présente en outre une branche d'expansion pouvant être raccordée (V), au moyen de laquelle, dans son état ouvert, un troisième organe d'expansion (34) peut être raccordé entre la deuxième branche de climatisation (IIb) et la branche principale (I).

6. Procédé pour faire fonctionner un dispositif de climatisation selon l'une quelconque des revendications précédentes,
**caractérisé en ce que**
- la branche de contournement (III) est ouverte,
- la branche de connexion (IV) est ouverte,
- le premier évaporateur (161a) est parcouru par de l'air provenant de l'habitacle du véhicule, un fluide caloporteur détendu dans le premier organe d'expansion (18a) s'évaporant dans le premier évaporateur (161a),
- le deuxième évaporateur (161b) est parcouru par de l'air provenant de l'habitacle du véhicule, du fluide caloporteur comprimé étant condensé dans le deuxième évaporateur (161b), et
- l'air ayant circulé à travers le premier évaporateur (161a) et le deuxième évaporateur (161b) est ramené dans l'habitacle du véhicule.

7. Procédé selon la revendication 6,
**caractérisé en ce qu'**
un échangeur de chaleur de chauffage pouvant être chauffé est associé à chaque évaporateur (161a,b), l'échangeur de chaleur de chauffage peut être parcouru au moins en partie par le flux d'air provenant de l'évaporateur respectif (161a,b).

8. Procédé pour faire fonctionner un dispositif de climatisation selon la revendication 5,
**caractérisé en ce que**
- le chemin de contournement (III) est ouvert,
- la branche d'expansion (V) est ouverte,
- le deuxième évaporateur (161b) est parcouru par de l'air provenant de l'habitacle du véhicule et/ou de l'air provenant de l'extérieur du véhicule, qui est chauffé par interaction thermique avec un fluide caloporteur chauffé par compression dans le compresseur (12), qui circule à travers le deuxième évaporateur (161b) et
- l'air ayant circulé à travers le deuxième évaporateur (161b) est conduit dans l'habitacle du véhicule.
